# EUROPEAN PATENT APPLICATION

(11) **EP 4 744 477 A1**
(43) Date of publication of application: **20.05.2026**
(21) Application number: 25202955.8
(22) Date of filing: 18.09.2025
(51) Int. Cl.: A01G 3/08, A01G 17/00

(54) **PRUNING ASSISTANCE SYSTEM FOR SUPPORTING A USER IN PLANT PRUNING AND CORRESPONDING METHOD**

(30) Priority: 15.11.2024 EP 24213263
(71) Applicant: Honda Motor Co., Ltd., Toyko 105-8404 (JP)
(72) Inventor: Franzius, Mathias, 63073 Offenbach/Main (DE); Fischer, Lydia, 63073 Offenbach/Main (DE); Brulin, Sebastian, 63073 Offenbach/Main (DE); Luttropp, Dr David, 63073 Offenbach/Main (DE)
(74) Representative: Roth, Sebastian

(57) **Abstract**

The invention is related to an assistance system for supporting a user in plant pruning comprising perception means (11) configured to perceive a target plant, processing means (12) configured to identify pruning locations of the target plant based on the perception and communication means (13) to output information on the identified pruning locations to the user.

## Description

This invention refers to a pruning assistance system for supporting a user in plant pruning and a method thereof.

Tree pruning is a critical practice in both horticulture and arboriculture, necessary for maintaining tree health, structural stability, and aesthetic appeal. Proper pruning mitigates risks such as disease, mechanical failure, and poor growth patterns, ensuring that trees remain productive and safe in both urban and agricultural environments. However, tree care is labor-intensive, and pruning in particular requires a high level of skill, and precision. This complexity has led to challenges in tree maintenance, especially in large-scale operations like orchards.

For instance, many orchards, including those in countries like Germany, often suffer from insufficient pruning due to the time and expertise required. This neglect not only impacts the productivity of fruit-bearing trees but also has broader ecological consequences. Poorly maintained trees can become susceptible to disease and pest infestations, which can spread to other plant species and disrupt local ecosystems. Furthermore, neglected orchards may fail to support biodiversity, as they become less hospitable to wildlife due to the overgrowth of canopies and the deterioration of tree health.

Pruning fruit trees presents several unique challenges that can limit the efficiency and productivity of orchards when performed manually:
Pruning fruit trees is highly specialized work that requires knowledge of each species' growth and fruiting habits. Incorrect pruning can lead to reduced fruit yields or even long-term damage to the tree. For instance, cutting too many fruit-bearing branches can severely impact productivity, while pruning at the wrong time can reduce the tree's ability to fruit in the following season. Timing, in particular, is critical; pruning must be done when the tree is dormant or in its correct growth phase to avoid disrupting the fruiting cycle.

Improper pruning can result in overcrowded fruit, smaller fruit sizes, or a decline in overall yield. Fruit trees that are left unpruned or improperly pruned often bear too many small, low-quality fruits, as the tree's resources are spread too thinly across excessive growth. On the other hand, well-pruned trees produce fewer but larger, higher-quality fruits because the tree can concentrate its energy on fewer, more productive branches.

Another important aspect is safety of the harvesting person and/or the pruner: When assisting the pruner, accessibility of the fruits or the resulting pruned tree can be improved. The assistance may guide the pruner in a way that clear passages for ladder access are achieved. Positioning of the ladder is made easier and less error prone, because the harvesting person will intuitively place the ladder using the cleared passage. On the other hand, the system may also improve the safety of the pruner himself: The assistance system may recommend a sequence for removing parts of the plant such that the cut parts may be taken out from the plant easily. Especially, in case the pruning person must use a ladder, this avoids that the pruner becomes unbalances by handling of the cut pieces.

The assistance provided by the inventive system and method may be adjusted regarding its focus. Thus, depending on the particular situation, the safety aspect might have priority over efficiency and productivity or vice versa. The different aspects may also be weighted to ensure a reasonable compromise. For example, pruning plants that are relatively small may even not require using a ladder. Consequently, the safety aspect is neglectable. On the other hand, this may be the dominant aspect for pruning a tall tree.

Pruning fruit trees, especially in large orchards, is physically demanding and time-consuming. Manual pruning requires the use of tools such as ladders, pole saws, and hand pruners, which can be labor-intensive and increase the risk of injury. In larger fruit trees, accessing the upper canopy or interior branches can be particularly difficult, leading to incomplete or inconsistent pruning.

As fruit trees often have specific pruning windows (usually during dormancy), large-scale operations face the challenge of completing pruning tasks within a limited time frame. Precision is also crucial, as small errors-such as cutting the wrong branches-can have long-term consequences on fruiting capacity and tree health. Inconsistent or rushed pruning can significantly reduce the productivity of commercial orchards, leading to financial losses.

To address these issues, technological innovations are being developed to assist in the pruning process. Rather than replacing human expertise, a tree pruning assistance system is designed to support the user, helping them improve their skills and confidence over time. By offering guidance on the most effective cuts and minimizing physical effort, these systems can make pruning more efficient and precise. This allows for better management of large-scale operations while ensuring the ecological benefits of well-maintained trees are preserved.

It should be mentioned that unless differently described, the expressions "tree" and "plant" are used as synonyms within this disclosure. In case that a description exclusively refers to trees excluding other plants, this will be mentioned specifically within this disclosure.

In order to overcome the above mentioned technical problems, this application provides an assistance system and a method for tree pruning according to the enclosed independent claims. The invention is defined in the appended claims. Advantageous features of the present invention are defined in the corresponding dependent claims.

A pruning assistance system for supporting a user in plant pruning comprises perception means configured to perceive a target plant, processing means configured to identify pruning locations of the target plant based on the perception and communication means to output information on the identified pruning locations to the user.

The system helps to identify pruning locations of a plant, which may specifically be trees, based on the perception of the plant and an automatic detection of pruning locations on the plant. These locations may be part of the information output to the user. The identification of the (suggested) pruning locations preferably is performed by applying a model on the perceived target plant, which is trained on data collected from earlier pruning activities. These data at least comprises perception data of a plant before pruning and after pruning. The training data can comprise individual training sets for different pruning styles so that a plurality of dedicated models can be trained. These dedicated models can then be selected in response to a desired pruning style.

For example, by accessing a database, the assistance system may obtain information on how to improve plant health, food quality, food quantity, flowering, plant geometry, storm safety, safety for the pruner, aesthetics and others. These aspects are then considered when identifying pruning locations that can be recommended to the user.

The perception is understood to correspond to perception data provided by the processing means.

The core advantage of the present invention is that a user is guided through the tree pruning process by providing information on pruning locations.

In an embodiment of the pruning assistance system, the processing means is configured to obtain information on at least one of a plant health improvement, fruit quality improvement, fruit quantity improvement, flowering improvement, plant geometry improvement, storm safety improvement, safety improvement for the pruner, and aesthetics improvement.

Preferably, this information is obtained by accessing a database and as already mentioned, it is considered for identifying the pruning locations by the processing means of the pruning assistance system.

An advantageous effect of the foregoing embodiment is that the tree pruning quality is enhanced based on the information.

In an embodiment of the pruning assistance system, the processing means is configured to identify pruning locations according to a set support level, wherein the support level is one of a basic support level giving general information on pruning for the target plant based on the plant species/cultivar of the target plant, or a normal support level including classification of the target plant's trunk and branches based on the perception of the target plant, or full support level with live interactive location visualization in the plant. Preferably, the desired support level can be set by the user.

The basic level for example does not provide a full plant analysis and no concrete pruning location proposals but provides general information on pruning. General information corresponds to suggestions on locations that are provided to the user. This general information may be provided in form of textual, visual or audible representation. For instance, the knowledge of the target plant's species/cultivar may be used to filter information of the accessible databank that is related to the target plant's species/cultivar. In particular, based on the filtered information the pruning locations may be identified.

The normal support, in contrast, may already include classification and visualization of a target plant trunk and branches, for example, main branch, secondary, fruiting, water shoots. The classifications may be used to filter information of the accessible databank that is related to the respective classification. In particular, based on the filtered classification the pruning locations may be identified.

Contrary to the basic level, for the normal support level the classification is performed to classify certain subareas of the tree based on the perception.

The classification is being visualized, e.g. by a display of the communication means, in relation to the perceived tree. For instance, the classified portion of the tree that is classified as the main branch is visualized in a certain color reserved for the illustration of the main branch. Additionally or alternatively, other distinguishable identifiers and/or marks may be used to visualize the classifications.

The full support level takes into consideration the interactive behavior of the user to determine the user's intention. Based on the determined intention, it may be filtered information of the accessible databank that is related to the determined intention and the filtered information may be used to identify the pruning location by the processing means.

Additionally, the full support level integrates live interaction location visualization, for example, using an augmented reality overlay.

It should be understood that the normal and full support level may incorporate the features of the basic level. Additionally, the full support level may incorporate the features of the normal level.

It should be noted that within this disclosure, examples of visualization of information may apply to any kind of information unless some kind of information is explicitly excluded from the referred visualization. The mere lack of mentioning is not considered to be understood as an explicit exclusion.

An advantageous effect of the foregoing embodiment is that different levels of support may be established. The basic level incorporates the effect that a rather simple support level is provided based on knowledge of the species/cultivar of the plant. The normal level incorporates the effect that support is provided based on classification of subareas of the tree. The full support level incorporates the effect that support is provided additionally based on the user's intention. It is especially advantageous to enable that the user can select the desired support level case-by-case. This allows the user to adjust the assistance provided by the system to his actual needs and specific skills in relation to a particular plant.

In an embodiment, the communication means comprise a display that is configured to display the output information.

The display may be any kind of display. Preferably, the display is a touch display that allows input of the user to interact with the system via touch operations input by the user. Alternatively or additionally, a separate input interface may be provided by the system, e.g. it may be comprised in the communication means.

An advantageous effect of the foregoing embodiment is that the output information may be provided visually.

In an embodiment, the output information includes at least one of a recommendation on a set of pruning locations, information on the next best pruning location, information on a result of evaluating the quality of a user-provided location, a visualization of an overlay of estimated pruning quality over the target, and visualization of predicted tree growth. Visualization of tree growth is based on a simulation of such tree growth. The simulation predicts outcomes for different cutting approaches. This helps the pruner to improve his skills. The prediction of plant growth by simulation and respective visualization preferably is provided in the full support level.

For each of the listed information that may be included in the output information, the system may use the accessible database as mentioned before. In particular, the content of each of the possible information may differ for different support levels.

For instance, the recommendation may differ for in case the target plant is an apple tree or a cherry tree.

Additionally, if the system allows the input of objectives or determines objectives, the recommendations may align with the objectives.

The information on the next best pruning location is understood to be a sorted output of pruning locations. This may be achieved by providing a sorted list, e.g. a chart, or by sequentially outputting the next best pruning location. It should be noted that a sorted list or just the next best pruning location may be determined based on a determination algorithm within the system. For instance, the possible pruning locations may be embedded into an optimization problem by defining certain objectives or costs.

Certain objectives for tree pruning are explained in the appended description.

A user provided location may be determined directly from user input to the system or by determining an intention of the user. The direct user input may be any input related to a certain pruning location, e.g. in case the display is a touch display, the user may touch a certain branch which the user wants to prune. Alternatively, the user might point to a part of the target plant and the respective position is determined from the target plant perception. An intention may be determined based on an intention determination algorithm provided in the system. For instance, a user prepares for cutting a certain branch or just points at a branch which shall be pruned and the system determines the intention of the user and afterwards evaluates the quality of this choice.

The intention determination algorithm may, for example, consider a history of pruning. The history may specifically comprise information on previous work from the same day. The algorithm may detect the effects achieved by the pruning of the plants, and determine the intention accordingly. For example, the pruning performed earlier that day mainly cut new sprout of the year. From this observation, the algorithm determines that only quick maintenance pruning is intended. This finding will then be used in the assistance for the following assistance. Long term history may also, alternatively or additionally, be considered. For example, pruning styles applied in the past are analyzed and the preferred styles are determined. This style will then be applied for the assistance.

The determination of an in intention may also consider circumstances like season and/or location. This allows to determine the intention more precise, because the assistance can distinguish between different orchards and/or between quick maintenance pruning and intensive pruning, which shall not be performed during the growth period.

The visualization of an overlay of estimated pruning quality over the target plant may be achieved by using distinguishable identifiers and/or marks for the overlay. For instance, each pruning location may be marked and a connected label may be displayed that indicates the pruning quality in a ranking illustration. The ranking may refer to quality levels of "very good", "good" and "bad" or the like, also with a more granular distribution. Alternatively or additionally, the quality may be indicated by percentage values, wherein "100 %" may refer to the best pruning location, whereas "0 %" may refer to the worst pruning location.

Alternatively or additionally, such visualization can use for example a color indication using a scale from red for bad locations to green for good locations.

An advantageous effect of the foregoing embodiment is that the pruning quality is enhanced by provision of the recommendations.

In an embodiment, the processing means is configured to determine deviations of executed pruning from proposed pruning locations, and to renew the identification of pruning locations and to output new information on the pruning locations of the renewed identification.

In particular, the processing means is configured to renew the identification of the pruning locations in response to determined deviations from the proposed pruning locations.

Such deviation may be determined based on the perception of the target plant by the perception means. For instance, actual pruning locations of the user are perceived and the deviation from the proposed pruning locations is then determined.

The determination of the actual pruning location may be performed by projection of the users behavior (cutting) on to the actual pruning location.

For instance, the device for pruning provides a laser that points at the direction to be pruned. A camera may then determine the actual pruning location and in response, the deviation. This could be achieved by computer vision algorithms that are applied in a processing step for camera based recordings, e.g. in case the perception means is a camera.

Moreover, a vest could be used and the pruning system may be configured to determine an orientation of the vest, such that the actual pruning location may be determined. This could be achieved, e.g. by positions sensors located in the vest.

Alternatively or additionally, deviations may correspond to changed circumstances. Those can be changed objectives, user inputs or even changes of the target plant. For instance, the user may have cut a certain branch after the previous identification of the pruning locations has been finished. Therefore, the input interface may be used for determining deviations.

An advantageous effect of the foregoing embodiment is that the system is updated in case of deviations. Consequently, future suggestions for the pruning can be optimized with respect to actual pruning already performed by the user. A chain of erroneous sub optimal cuts performed by the user can therefore be avoided.

In an embodiment, the system comprises the input interface for receiving input from a user for inputting at least one of classification information of the plant, own preferences or information on potential future plant structure defining hypothetic scenarios.

This enables to override wrong classifications performed by the system or to inject own preferences or to test "what if I develop this into the main branch" scenarios or other hypothetical scenarios. For this purpose, the system may particularly provide simulations on the future plant growth that are visualized to the user for feedback. Additionally, explanations on the hypothetical scenarios may be provided. A hypothetic scenario includes information on potential future plant structure. The potential future plant structure allows to analyze what would happen if the user acted in a certain way. For example, developing a branch into a main branch. The system might then, based on this assumption, adapt its recommendation or adjust growth prediction.

Own preferences may e.g. be preferences like to define the objective of having a high fruit outcome or increasing the health of the target plant. Additionally, the system may be configured to execute identification of pruning locations to conform to a pruning style or purpose selectable by a user during selection of his preferences. Thus, the preferences may also be pruning style or pruning purpose (objectives).

Possible styles are: renewal pruning, regulatory pruning, spur pruning initial pruning after planting, espalier pruning. This list is not exhausting and other methodologies like Oeschbergschnitt, Palmerschnitt can be given as examples.

An advantageous effect of the foregoing embodiment is that the system is more cooperative. The results correspond more close to the desires of the user and acceptance of the system can be improved.

In an embodiment, the output information includes explanations on the identification process of recommended pruning locations.

The explanation may comprise a reasoning that is used for educational purposes.

Additionally or alternatively, the system could visualize a future growth simulation.

Additionally or alternatively, the system may provide information on applied pruning rules or evaluation results which are taken into consideration and that may be obtained from machine learning based estimates of qualities of pruning locations. An output could be for example "pruning here reduces future fruit quantity by 20%".

An advantageous effect of the foregoing embodiment is that the user experience is enhanced.

In an embodiment, the system is configured to simulate future plant growth after specific pruning for educational purposes and/or as a basis for providing the pruning location quality estimation.

The simulation results may be outputted visually to the user. For instance, the result after a certain time period may be shown. Additionally, the time steps in between may be shown. For instance in form of a time lapse.

The simulation may be based on a machine learning algorithm. A plurality of different ways to perform such a simulation is known in the art. These known simulations are applicable for the present invention. For example, rule or model based simulations as described in "Structural simulation of tree growth and response" by J. Hart, B. Baker and J. Michaelraj (Visual Comp 19, 151-163, 2003), a simulation of a tree and its environment as described in "Tree growth simulation based on ray-traced lights modelling" by Bence Tamás Tóth und Sándor Szénási (Acta Polytechnica Hungarica, Vol. 17, No4, 2020) or machine learning models that predict growth based on real data or other models as described in "DeepTree: Modeling Trees with Situated Latents" by Xiaochen Zhou, Bosheng Li, Bedrich Benes, Songlin Fei and Sören Pirk or "Latent L-systems: Transformer-based Tree Generator" by Jae Joong Lee, Bosheng Li and Bedrich Benes (ACM Transactions on Graphics, Vol. 43, No 1 Article 7, 11/2023) may be used.

An advantageous effect of the foregoing embodiment is that the user experience is enhanced.

In an embodiment, the communication means for outputting information comprises at least one of a user interface (UI) for augmented reality (AR), a user interface for virtual reality (VR), AR glasses, a smartphone, a tablet, a projection system directly illuminating pruning locations on the plant, an audio and/or vibration feedback device guiding into the direction of pruning.

The user interfaces for AR or VR may provide overlay layouts to output the information. In particular, the overlays are displayed in combination with the real world scene within VR environments. In AR environments merely the information is displayed as an overlay. In both environments the overlay information is preferably displayed such that the information is aligned with the real world scene.

The projection system may be comprised by the system separately from the communication means.

For instance, the projection system may be portable and/or wearable. The projection system may be a controllable luminaire, wherein the light emitting direction is adjustable. Moreover, the luminaire preferably emits a directed beam of light visible for the user. For instance, a controllable light source comprises a luminaire and position-adjustable micromirrors.

Additionally, a vest could be used to which the projection system is attached and the pruning system may be configured to determine an orientation of the vest, such that the direction pruning location may be determined at which the light is emitted. This could be achieved, e.g. by positions sensors located in the vest. Similarly, the projection system may be attached to the pruning device, e.g. a chainsaw.

The audio feedback may comprise directional instructions. For instance, the audio may comprise instructions like "turn left", "turn right", "this is the best pruning position", "the best pruning location is located on the most left branch". Thus, the audio may be used to direct the user to the proposed pruning location. Additionally, the communication means may be configured to enable voice recognition, such that the user can be directed interactively towards the proposed pruning location. For instance a machine learning language model can be used.

The vibration feedback may comprise vibrational identifiers based on which the user is directed to the proposed pruning location. For instance, the amount of vibration may be used to inform the user and/or the strength of the vibration may be used.

Alternatively, an actuator attached to the plant (for example to the tree trunk) vibrates the plant such that the part to be pruned moves for easy visual detection, for example by identifying the vibration modes of a tree and finding the best amplitude and direction of vibration to maximize vibration of the target part and minimize vibration of the other parts. It is to be noted that for the explanations provided in this document, reference is made to a single actuator. However, a plurality of actuators may equally be used to achieve the respective task. The task, in the example provided above vibrating the trunk, may be performed commonly, or different actuators may be used for achieving different tasks.

An advantageous effect of the foregoing embodiment is that the user experience for guidance towards the pruning location is enhanced.

In an embodiment, the processing means is configured to estimate a health status of plant parts and to give recommendations regarding pruning and/or other measures based on the estimated health status of plant parts.

The health status may be identify dead branches, infected leaves, parasites, lesions, nutrient deficiencies. This information of said recommendations may also be used in a visualization overlay to improve the information provided to the user.

An advantageous effect of the foregoing embodiment is that recommendations for increasing the health of the target plant are provided.

In an embodiment, the processing means is configured to identify plant species preferably in addition variety/cultivar type as a basis for its pruning recommendations, based on at least one of available map data, user choice, or automatic detection.

The map data supports the identification of the plant species, the variety/cultivar type based on the geographic knowledge obtained by the map data. For instance, some plants are merely available in certain locations. Such knowledge might be included in the map data. For example, the map data contains cultivar classification from planting time or earlier, which means from expert assessments stored in the database (e.g., planting records or previous seasonal expert notes, such as from fruit-bearing observations). Information included in the map are part of the database. Thus, the information obtained from the accessible database may be filtered based on the map data. Newly gathered map data is processed in to classify the plant. The map data may serve as input to retrieve relevant entries from the existing (mapbased) database. This iproves the retrieval and narrowing-down process based on live contextual information.

The automatic detection may be based on machine learning algorithms. Such automatic detection could use GPS-tagged leaf images. Based on a collection of high-resolution leaf images and their corresponding GPS coordinates from various geographic locations, a deep learning model is trained and validated. Features can be extracted from the visual data, for example using convolutional neural networks (CNN). After being trained on the image collection, the model can identify patterns in leaf structures. This allows to identify corresponding plant species.

An advantageous effect of the foregoing example is that the identification of the plant species is supported.

In an embodiment, the system is configured to obtain localization information and to localize a plant on the map and to map a current plant 3D structure onto recorded 3D plant structure from the past.

In particular, the system may build up a map or integrate location of the plant and optionally add additional data like species, cultivar, last pruning, ownership, permission to harvest, 3D plant model, last year's harvest amount, et cetera into an existing map. These maps can be used for a communication platform of the community in which harvesting is allowed, pruning can be planned, a pruner can be searched pruning services can be offered for educational pruning exercises can be offered.

The system further may use GNSS and/or magnetometer and/or visual localization to localize a plant on the map and to map a current plant 3D structure onto recorded 3D plant structures from the past. Based on information included in the map, and current plant shape, the system may not only identify required pruning intensity, but also improve growth prediction. Advantageously, 3D plant structure is collected over a time period including a plurality of pruning activities. Such collection of information reflects the consequences of pruning and prediction of effects caused by a specific type of cut can be made. Such prediction may not only be applied to growth of the plant, but also to expected harvest amount.

In addition, the collection of 3D structures over a plurality of pruning activities is advantageous for multi year planning. It is especially preferred to store pruning plans for the respective plant. In case that such pruning plan covers a plurality of pruning activities, the pruning plan may include time information when the goal shall be achieved. Depending on the progress already achieved, and the remaining time to achieve the pruning target of the pruning plan, improved assistance can be provided. This allows to achieve a pruning goal after a plurality of timely separated pruning activities, wherein in each activity excessive cutting can be avoided.

In an embodiment, the system is configured to use a 3D reconstruction of the plant to create a 3D graph model, with nodes representing branch junctions and edges representing branches, where each edge contains attributes such as branch length, thickness, and angles, allowing for the analysis of tree structure and enabling pruning decisions based on the tree's geometry and growth dynamics.

The 3D graph model of the target plant may be obtained by visual machine learning algorithms and/or by computer vision models.

An advantageous effect of the foregoing embodiment is that a digital representation of the plant is obtained.

In an embodiment, the system is configured to optimize pruning locations based on multiple objectives, including accessibility to ensure clear paths for movement, maintenance, or harvesting, overall tree health by maintaining healthy branch growth and balancing rejuvenation potential with the ratio of cut branches to existing leaves, maximization of fruit production by optimizing light penetration to fruit-bearing branches while preventing resource exhaustion, and aesthetic considerations to preserve specific forms, symmetry, or height constraints according to user preferences.

An advantageous effect of the foregoing embodiment is that the system may optimize over multiple objectives thereby achieving compromise which, for example, suits the needs of the planned but also the intention of the user.

In an embodiment, the system applies pruning rules Before a recommendation for a cut on a healthy branch is given, the system can check if, under the assumption that an ill or dead branch is removed, the recommendation is still valid.

In the following, a list of branch types is provided
- Central Leader (Trunk): The main vertical trunk that forms the backbone of the tree, supporting the overall structure and ensuring balanced vertical growth.
- Scaffold Branches: Primary lateral branches that grow off the central leader, providing the main framework of the tree and bearing much of the fruit.
- Lateral Branches: Smaller branches that grow from scaffold branches; these typically produce the fruiting spurs and bear the majority of the fruit.
- Water Sprouts: Vigorous, upright shoots that often grow from the trunk or major branches, usually unwanted as they don't contribute to fruiting and compete for nutrients.
- Suckers: Fast-growing shoots that emerge from the base of the tree or rootstock, diverting energy from the main trunk and should be removed.
- Fruiting Spurs: Short, knobby growths on lateral branches where flowers and fruit form. Proper pruning encourages the development of these spurs for future fruit production.

In the following, a preferred embodiment of the present invention shall be described in more detail based on the corresponding figures.
- Figure 1: shows a schematic view of the pruning assistance system according to an embodiment, and
- Figure 2: shows a flowchart of a first method.

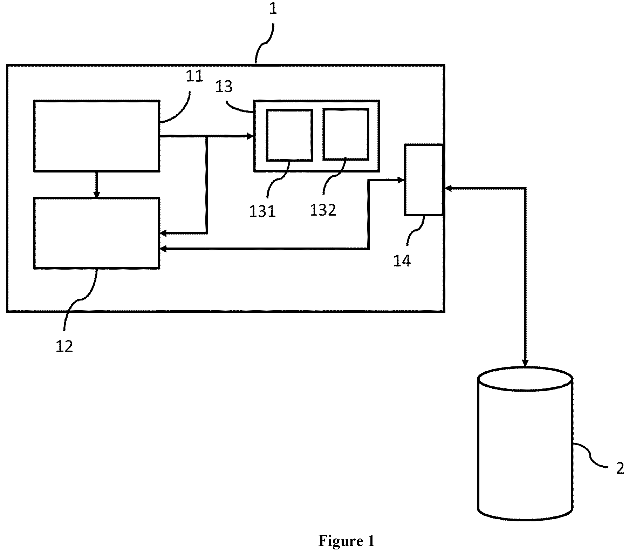

Figure 1 is a schematic view of the pruning assistance system according to an embodiment. The pruning assistance system comprises a smartphone 1 and an external database 2.

The database 2 may also be an internal database comprised in the smartphone 1 or any other unit.

The smartphone 1 comprises perception means 11, processing means 12, communication means 13 and a communication interface 14. Alternatively, each component may be provided in a separate device or in any other combination. Thus, wired or wireless communication interfaces may be provided in any of the other devices.

The communication means comprises an input interface 131 and a display 132. In this embodiment of the smartphone 1, the user interface 131 and the display 132 may be the same. For instance, a touch display may be used.

The database 2 is the internet in this embodiment. However, any accessible server, computer, cloud, storage or the like may serve as the database 2.

Internally, each module may be connected to any of the other modules, which is not shown explicitly. The displayed arrows show the preferred information flow and its direction. The connection may be realized by an internal data exchange link. The internal data exchange link may be any one of Inter-Integrated Circuit (I₂C), Serial Peripheral Interface (SPI), Universal Asynchronous Receiver/Transmitter (UART), Controller Area Network (CAN), Universal Serial Bus (USB), General Purpose Input/Output (GPIO), Peripheral Component Interconnect Express (PCIe) or Ethernet.

According to preferred embodiment, the perception means 11 is a camera. Alternatively, the perception means may be any other device that is capable of generating a representation of the target plant.

The perception means 11 provides the image information of the perception to the communication means 13.

The perception means 11 provides the image information of the perception to the processing means 12.

The processing means 12 may particularly be realized as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU).

The processing means 12 receives information from the database 2 via the communication interface 14. Additionally, the processing means 12 may receive information from the database 2 in response to a request. Additionally, the processing means 12 may provide the image information or a result of processing the image information of the target plant to the database 2.

The communication interface 14 may be a wired or wireless communication interface.

The processing means 12 provides information on the identified pruning location to the communication means 13.

The communication means 13 may particularly be a touch display.

The communication means 13 provide user input information to the processing means 12.

The user input information is provided by the user interface 131.

The display 132 may be configured to display the information on pruning locations as received by the processing means 12. Additionally, the display 132 may display the image information received by the perception means 11.

The communication means 13 may provide user input information either directly or indirectly over the processing means 12 to the database 2.

In a specific example, the user first uses his smartphone 1 to perceive a target plant. Thus, the user uses the camera 11 to capture an image of the target plant.

This image information is then provided to the processing means 12.

The processing means identify pruning locations based on the processed image, user preferences or the like.

For instance, the user preference is to increase the fruit output for the plant. Thus, the smartphone 1 may display a list of possible preferences in a display 132. The user then selects a the certain preference via touching the area at which the preference is displayed on the display 132.

The processing means takes into consideration the user's preferences as well as the image data and filters a database for information that matches the user's request the best. This may be achieved by support of a large multimodal model (LMM), which is either provided in the processing means 12 or the database 2. For instance, the processing means 12 provides a structured request comprising the image information and the preferences of the user. Then, this request is provided to the database 2, based on which information of the pruning locations is provided to the processing means 12.

The identified pruning locations are communicated to the communication means 13. Then the identified pruning locations are displayed in the display 132.

In particular, the smartphone ensures to be in an image capturing mode again and the identified pruning locations are displayed as an overlay on the real-time image of the camera 11.

In consequence, the user is able to understand, which portion of the tree may serve as a pruning location to achieve his preference.

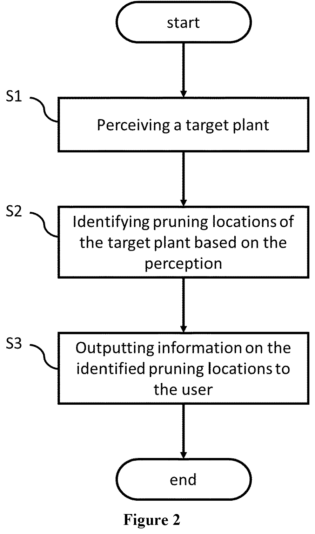

Figure 2 is a simplified flowchart of a first method.

It is shown a step S1 for perceiving a target plant.

It is shown a step S2 for identifying pruning locations of the target plant based on the perception.

It is shown a step S3 for outputting information on the identified pruning locations to the user,

For step S1, it is referred to the detailed description above of the perception means which completely describes the functionality of the indicated step in its entirety. It should be noted that the indicated step is independent of the executing device.

For step S2, it is referred to the detailed description above of the processing means which completely describes the functionality of the indicated step in its entirety. It should be noted that the indicated step is independent of the executing device.

For step S3, it is referred to the detailed description above of the communication means which completely describes the functionality of the indicated step in its entirety. It should be noted that the indicated step is independent of the executing device.

It should be noted that any other aforementioned component and functionality are particularly applicable to be defined in a method.

The database 2 may generally comprise the following information on pruning techniques and challenges.

Thinning involves selectively removing entire branches or shoots to reduce canopy density. This technique is particularly important for fruit-bearing trees, as it allows sunlight and air to penetrate the interior branches, which is critical for improving fruit size, color, and overall quality. In apple and pear trees, for instance, thinning ensures that the remaining fruit has sufficient space and resources to grow to full size, while reducing the risk of fungal infections that thrive in dense, moist canopies.

For fruit trees, crown reduction helps manage tree height and spread, ensuring that all parts of the tree receive adequate sunlight. This technique is useful for preventing overcrowding in orchards and maintaining the accessibility of fruit for harvesting. In species such as peach and plum trees, which produce fruit on new growth, crown reduction can stimulate vigorous regrowth, increasing fruit production in subsequent years.

For fruit-bearing trees, removing dead or non-productive wood is essential to focus the tree's energy on producing healthy fruit. Deadheading, particularly in trees that bloom before fruiting, such as citrus, helps encourage more blooms, leading to a higher fruit yield. Removing deadwood also minimizes the risk of disease and ensures that nutrients are efficiently distributed to fruit-bearing branches.

In fruit orchards, crown lifting can be used to remove lower branches, allowing better access for machinery or manual harvesting without damaging the tree. This practice is particularly helpful for taller fruit trees like cherry or avocado, where access to the lower parts of the tree is necessary for efficient orchard management.

While less common in fruit-bearing species, pollarding can be used in certain situations to control tree size and promote the development of fruiting wood. For instance, mulberry trees, which produce fruit on new growth, can be heavily pruned through pollarding to encourage the growth of new, productive shoots.

Moreover, species specific pruning requirements for fruit trees may be comprised.

Apple and pear trees produce fruit on spurs, which are short branches that bear fruit year after year. Pruning these trees involves removing older, non-productive branches to stimulate the growth of new spurs. Thinning is particularly important to reduce the number of fruits per branch, allowing the remaining fruits to grow larger and healthier. Regular pruning also helps prevent biennial bearing, where the tree alternates between heavy and light fruiting years.

Peach and nectarine trees bear fruit on one-year-old wood, meaning that pruning should focus on encouraging the growth of new shoots each year. Heavy annual pruning is necessary to maintain a steady supply of fruiting wood. Crown reduction and thinning are especially important to ensure that the tree's energy is focused on producing high-quality fruit on new branches, rather than supporting older, less productive growth.

Cherry trees bear fruit on older wood, so pruning should focus on maintaining a balance between removing deadwood and promoting new growth without cutting back too much productive wood. Cherries are prone to fungal infections, making proper thinning and air circulation a key priority to reduce disease risk and enhance fruit quality.

Citrus trees, such as oranges and lemons, require minimal pruning compared to other fruit species. However, deadwood removal and light thinning are important for maintaining healthy fruit production. Over-pruning can reduce yield, so it is important to focus on removing only diseased or damaged branches and thinning to improve sunlight penetration.

Preferences for the tree pruning are listed below.

### Disease Prevention and Damage Mitigation:

Pruning is essential for the removal of dead, diseased, or damaged branches, which can serve as entry points for pathogens and pests. Deadwood can harbor harmful fungi and insects, which may spread to healthy sections of the tree. Removing these compromised parts helps limit the spread of infections and improves the tree's ability to heal. Strategic pruning also helps prevent potential disease outbreaks by isolating infected areas early, thus protecting nearby trees and plants.

Regulation of Growth and Structural Stability:
Trees often grow in ways that lead to weak branch unions, overextended limbs, or imbalanced canopies, increasing their susceptibility to mechanical failures. Pruning directs tree growth, eliminating weak or overgrown branches and promoting a more stable, balanced structure. This is especially critical in urban or high-traffic areas where branch failure can pose significant safety risks to people and property. Reducing canopy density also decreases wind resistance, helping trees withstand environmental stressors such as strong winds or snow accumulation.

### Keeping Roads, Walkways, and Infrastructure Clear:

In urban and suburban settings, tree branches often grow over roads, sidewalks, and buildings, creating potential hazards or obstructions. Pruning is essential to ensure that branches do not block roadways, impede walkways, or interfere with power lines and structures. This not only enhances public safety but also maintains the functional integrity of infrastructure.

### Improving Air Circulation and Light Penetration:

Overcrowded tree canopies limit both airflow and sunlight from reaching the inner branches and lower parts of the tree. This creates an environment that fosters fungal growth and disease, while also stunting interior growth. Pruning opens the canopy, promoting better air circulation and light penetration, which encourages healthier growth and reduces the risk of infection. Additionally, pruning allows more light to reach plants and buildings beneath the tree, preventing excessive shadowing that can inhibit the growth of nearby vegetation or reduce sunlight for structures.

### Enhancing Fruit Quantity and Quality:

In fruit-bearing trees, pruning is essential for optimizing both yield and fruit quality. Trees that are left unpruned typically produce an excess of branches, which can lead to smaller, lower-quality fruit due to competition for the tree's resources. By removing non-productive or overcrowded branches, pruning redirects the tree's energy towards the fruit-bearing branches, resulting in larger, higher-quality fruit and more consistent harvests. Well-pruned trees also allow for easier access during harvesting and maintenance operations, improving orchard management efficiency.

### Aesthetics and Plant Shape:

Pruning plays an important role in shaping trees for aesthetic purposes, whether in residential landscapes, parks, or gardens. It can be used to maintain a desired form, improve symmetry, and enhance flowering. For ornamental trees, pruning promotes more vibrant blooms and helps maintain a visually pleasing structure. By controlling growth, pruning also prevents trees from becoming overgrown, which can detract from the overall aesthetics of a landscape.

### Preventing Excessive Shadowing:

Overgrown trees can cast excessive shadows, reducing the amount of sunlight available for surrounding plants or nearby buildings. This can hinder the growth of understory plants and may even affect energy efficiency in homes and other struc-tures. Pruning helps manage the canopy size and shape, allowing more light to penetrate the surrounding area and ensuring that adjacent plants receive adequate sunlight for photosynthesis. In urban areas, this can also contribute to better energy use in buildings by maximizing natural light.

Each of these factors underscores the necessity of pruning as a critical component of tree maintenance. Whether for safety, productivity, or aesthetics, regular pruning ensures that trees can thrive in their environments while minimizing potential risks and maximizing their ecological and practical value

### Pruning for Other Plants:

While tree pruning is crucial for maintaining the health and structure of trees, many other types of plants also benefit from regular pruning. Shrubs, vines, and flowering plants often require selective cutting to encourage healthy growth, enhance flower-ing, and prevent disease.

Shrubs: Pruning helps shape shrubs and promote denser foliage. For flower-ing shrubs, such as hydrangeas or roses, pruning stimulates bloom production by removing old or unproductive branches. It also prevents overgrowth, which can lead to poor air circulation and increased susceptibility to fungal infections.

Vines: Fast-growing vines, such as grapevines or clematis, benefit from regular pruning to control their spread and improve fruit or flower production. Pruning helps prevent overcrowding, which can lead to weak growth and a lack of air and light penetration.

Perennials and Annuals: For perennials, such as lavender and salvia, pruning extends the blooming period and encourages a more compact, attractive shape. Deadheading, or the removal of spent flowers, promotes new blooms in many flowering annuals like marigolds and petunias.

Pruning across different plant species supports healthier growth patterns, enhances visual appeal, and reduces the risk of disease, just as it does with trees. A well-maintained garden that includes regular pruning fosters a more vibrant, productive, and visually balanced landscape.

The challenges associated with pruning fruit-bearing trees highlight the need for pruning assistance systems that can improve accuracy and efficiency. By using technology to guide pruning decisions, such systems can help ensure that fruit-bearing branches are preserved while non-productive or unhealthy wood is removed. A pruning assistance system could provide real-time feedback on optimal cuts, taking into account the species-specific needs of the tree, thus optimizing fruit production.

Such systems can also reduce physical strain by automating certain tasks, making it easier to manage large-scale pruning operations in commercial orchards. By providing support to both novice and experienced pruners, these systems ensure that pruning is performed consistently, leading to better fruit yields, healthier trees, and reduced labor costs.

For many laypeople and hobbyists, tree pruning can feel daunting due to the perceived complexity and risk of causing harm to the tree. Without the requisite knowledge of tree biology or pruning techniques, there is a fear of making improper cuts that could damage the tree's structure, reduce fruit production, or introduce disease. As a result, many individuals shy away from pruning altogether, leaving trees overgrown or improperly maintained. This hesitancy is especially common among home gardeners who are unfamiliar with the species-specific requirements of their trees or lack the confidence to execute precise cuts.

A pruning assistance system can be invaluable in this context, offering guidance and real-time feedback to help users make informed decisions. By highlighting which branches should be removed and explaining the rationale behind each cut, the system empowers hobbyists to gradually build both skill and confidence. Over time, users can learn to recognize common pruning needs and gain a deeper understanding of how their actions affect the tree's health and productivity. In this way, the assistance system acts as both a practical tool and an educational resource, making pruning more accessible and less intimidating for non-professionals.

A pruning assistance system is useful for hobbyists who want to cut and grow trees (plants) over a longer period into a natural or unnatural but desired target shape over a longer period (years) of time (bonsai, heart-shaped apple-trees). Here, in the start, the system would acquire the actual state of the tree and propose or have the user draw a desired shape and save it as target shape. Over the growing period, the system would remind the user to reacquire the current shape and assist to cut/bend the tree to archive the target shape.

## Claims

1. A pruning assistance system for supporting a user in plant pruning comprising perception means (11) configured to perceive a target plant, processing means (12) configured to identify pruning locations of the target plant based on the perception and communication means (13) to output information on the identified pruning locations to the user.

2. A pruning assistance system according to claim 1, wherein the processing means (12) is configured to obtain information on at least one of: plant health improvement, fruit quality improvement, fruit quantity improvement, flowering improvement, plant geometry improvement, storm safety improvement, safety improvement for the pruner and/or harvesting person, and aesthetics improvement.

3. A pruning assistance system according to claim 1 or 2, wherein the processing means (12) is configured to identify pruning locations according to a set support level, wherein the support level is one of:
a. a basic support level giving general information on pruning for the target plant based on the plant species/cultivar of the target plant, or
b. a normal support level including classification of the target plant's trunk and branches based on the perception of the target plant, or
c. full support level with live interactive location visualization in the plant.

4. A pruning assistance system according to claim 3, wherein
the communication means (13) comprise a display (132) that is configured to display the output information.

5. A pruning assistance system according to one of the preceding claims, wherein the output information includes at least one of a recommendation on a set of pruning locations, information on the next best pruning location, information on a result of evaluating the quality of a user-provided location, a visualization of an overlay of estimated pruning quality over the target, a visualization of predicted tree growth.

6. A pruning assistance system according to any of the preceding claims, wherein the processing means (12) is configured to determine deviations from proposed pruning locations, and to renew the identification of pruning locations and to output new information on the pruning locations of the renewed identification.

7. A pruning assistance system according to one of the preceding claims, wherein the system comprises an input interface (131) that is configured to receive input from a user for inputting at least one of classification information of the plant, preferences or information on potential future plant structure.

8. A pruning assistance system according to one of the preceding claims, wherein the output information includes explanations on the identification of recommended pruning locations. [The assistance system according to one of the preceding claims, wherein the system is configured to execute identification of pruning locations to conform to a pruning style or purpose selectable by a user.]

9. A pruning assistance system according to one of the preceding claims, wherein the system is configured to simulate future plant growth after specific pruning for educational purposes and/or as a basis for providing the pruning location quality estimation.

10. A pruning assistance system according to one of the preceding claims, wherein communication means (13) for outputting information comprises at least one of: a user interface (UI) for augmented reality (AR), a user interface for virtual reality (VR), AR glasses, a smartphone, a tablet, a projection system directly illuminating pruning locations on the plant, an audio and/or vibration feedback device guiding into the direction of pruning.

11. A pruning assistance system according to one of the preceding claims, wherein the processing means (12) is configured to estimate a health status of plant parts and to give recommendations regarding pruning and/or other measures based on the estimated health status of plant parts.

12. A pruning assistance system according to one of the preceding claims, wherein the processing means (12) is configured to identify plant species, preferably in addition variety/cultivar type, as a basis for its pruning recommendations, based on at least one of available map data, user choice, or automatic detection.

13. A pruning assistance system according to one of the preceding claims, wherein the system is configured to obtain localization information and to localize a plant on the map and to map a current planned 3D structure onto recorded 3D plant structure from the past.

14. A pruning assistance system according to one of the preceding claims, wherein the system is configured to use a 3D reconstruction of the plant to create a 3D graph model, with nodes representing branch junctions and edges representing branches, where each edge contains attributes such as branch length, thickness, and angles, allowing for the analysis of tree structure and enabling pruning decisions based on the tree's geometry and growth dynamics.

15. A pruning assistance system according to one of the preceding claims, wherein the system is configured to optimize pruning locations based on multiple objectives, including at least one of accessibility to ensure clear paths for movement, maintenance, harvesting, overall tree health by maintaining healthy branch growth and balancing rejuvenation potential with the ratio of cut branches to existing leaves, maximization of fruit production by optimizing light penetration to fruit-bearing branches while preventing resource exhaustion, and aesthetic considerations to preserve specific forms, symmetry, or height constraints according to user preferences.

16. A pruning assistance system according to one of the preceding claims, wherein the system applies pruning rules at multiple spatial levels to optimize pruning decisions, including at least one of:
Whole Tree Level: Rules governing the overall tree structure, such as the positioning and reshaping of primary branches
Neighboring Branches Level: Rules for resolving competition between branches, determining which branch should be prioritized to improve overall tree performance
Branch Level: Fine-tuned rules for individual branches, considering fruit bud positions growth direction, number of fruit-bearing structures, and management of water sprouts.

17. A method for supporting a user in plant pruning comprising the steps of perceiving (S1) a target plant; and
identifying (S2) pruning locations of the target plant based on the perception; and outputting (S3) information on the identified pruning locations to the user.
